# EUROPEAN PATENT SPECIFICATION

(11) **EP 0 726 088 B1**
(45) Date of publication and mention of the grant of the patent: **18.06.2003**
(21) Application number: 96200138.4
(22) Date of filing: 19.01.1996
(51) Int. Cl.: B01F 5/10

(54) **Process and device for the preparation of sprayable compositions**
Verfahren und Vorrichtung zur Vorbereitung von sprühbaren Mischungen
Procédé et dispositif de préparation de compositions vaporisables

(30) Priority: 20.01.1995 AR 33078995
(43) Date of publication of application: 14.08.1996
(73) Proprietor: Grünenthal GmbH, 52078 Aachen (DE)
(72) Inventor: Krämer, Esteban Lakos, 1408 Buenos Aires (AR)
(74) Representative: Ungria Lopez, Javier

(56) References cited:
- WO-A-95/00321
- DE-A- 2 310 027
- DE-A- 4 237 610
- FR-A- 2 282 936
- US-A- 4 518 261
- PATENT ABSTRACTS OF JAPAN vol. 007, no. 252 (C-194), 9 November 1983 & JP-A-58 137435 (MITSUBISHI DENKI KK), 15 August 1983,
- PATENT ABSTRACTS OF JAPAN vol. 009, no. 160 (C-289), 4 July 1985 & JP-A-60 034724 (TOYOTA JIDOSHA KK), 22 February 1985,

## Description

The invention relates to the manufacture of aerosols by a process by which the composition to be dispensed, without the propellant, is fractioned into the corresponding containers and the propellant is filled in through the valve already crimped on its seat. The invention also comprises a device for carrying out said process.

### BACKGROUND OF THE INVENTION

Since the fifties, for different uses and purposes, an alternative manner for dispensing and dosing compositions of varied nature -both for industrial and home use- has appeared and established comprising the packing of the compositions in pressure resistant containers, generically denominated aerosols.

This denomination includes articles or devices which comprise a pressure resistant container whose contents comprise a liquid phase of a liquified compressed gas stored under pressure and temperature conditions within the container; and a product which is dissolved or dispersed in said liquid phase with the necessary additives and adjuvants.

By pressing a valve which is an integral part of a sealed assembly of the container, the content of the container is gradually liberated in the form of fragmented tiny liquid particles, dispensed and propelled as a mist, acting as a vehicle for the components dispersed or solubilized in the liquid phase or in the propellant itself, due to the pressure differential between the external and internal atmosphere of the container.

The devices described in the prior art, grouped together under the general term aerosols (also sprays), present in practice several variations. When the product to be dispensed is a solid, the contents of the container are a dispersion of the product in the liquid phase of the propellant, with the additives and stabilizers of the dispersion, such that the propellant is part of the solvent-dispersion medium, i.e. the case of pharmaceutical aerosol (spray) inhalators.

In the pharmaceutical field, aerosols (sprays) have become very popular because of the advantages for administering active agents which have to be delivered directly to the respiratory tract (mainly bronchus and lungs) whose advantages reside mainly in the fact that the mist of ejected particles are inhaled with a minimal effort from the patient, and the inhaled product reaches directly and massively the deepest zones of the respiratory tract where it produces immediately the desired therapeutic effect. This is of tremendous importance in the case of bronchial asthma crisis or for preventing asthmatic crisis by administering programmed prophylactic dosage, avoiding the side effects common in *per os* administration.

A series of compounds generally designated as CFC and saturated hydrocarbons of low molecular weight (n-butane, isobutane, pentane, isopentane), have been used as propellants, regardless of the purpose of the compositions or use of the same.

The CFC propellants are lower chlorofluorinated hydrocarbons which are gradually substituted by lower hydrocarbons completely fluorinated (chlorine free) due to the deleterious effect attributed to said CFC hydrocarbons on the ozone layer. The presently preferred propellants, considered as acceptable, are 134a (1,1,1,2-tetrafluorethane) and 227-a (1,1,1,2,3,3,3-heptafluoropropane).

The conventional method for production of inhalator aerosols (sprays) comprises the steps of preparation of the product to be dispensed; filling the container with the correct amount of active ingredient, dispersion aids and propellant; and sealing the container by inserting the valve under pressure (crimping). Often the active drug is precoated with the surfactants and dried in order to facilitate its subsequent dispersion in the propellant.

This technique involves the handling of solutions, solvents and the propellant at temperatures sufficiently low and compatible with the liquid state of the propellant (cold packing).

In practice, the handling of propellant substances whose boiling point, at atmospheric pressure, ranges from -50°C to 5°C, involves the use of expensive cryogenic installations.

Another common alternative is the use of at least two propellants in which case, the lower vapor pressure propellant is used as the vehicle for the components of the composition. Thus, in each container the adequate volume of the less volatile propellant is dosified, together with the necessary amounts of the components of the composition, at low temperatures, generally between about -10°C and 5°C; then the valve is crimped in place and finally the composition is completed loading the highest vapor pressure propellant through the valve.

The above mentioned techniques require a careful handling of every stage mainly because the humidity often condensates as liquid water or ice which is difficult to avoid or control even with sophisticated installations. Furthermore, even in the case of propellants free of humidity it is impossible to avoid partial evaporation of the liquified propellant.

On the other hand, when attempting to obtain a perfect dispersion, it is necessary to pre-coat the active principles with the dispersion aids (surfactants). With the present invention, it is not necessary to pre-coat the solids with the surfactant, because the required stage through the homogenizer, incorporated to the system, forms a good coating on each solid particle delivering an homogeneous product, easy to resuspend, which is a very important feature in anti-asthma inhalators for the obtention of uniform dosages.

The inconvenients and disadvantages of conventional methods for the manufacture of aerosols can be solved by the process of the present invention in which a batch containing the active ingredient, the adjuvants and additives, and the liquid propellant in the appropriate quantities are mixed together in a pressurized vessel (reactor) for subsequent filling of each individual container through the crimped valve, at room temperature.

### BRIEF DESCRIPTION OF THE INVENTION

A process for the preparation of compositions which can be dispensed as sprays, comprising:
filling a container under pressure with the proper amount of the active(s) ingredient(s) of the composition;
introducing in said container an initial fraction, by weight or volume, of the liquified propellant which is sufficient for dispensing the components and dispersion aids under permanent agitation in an oxygen free atmosphere of nitrogen;
recirculation under high pressure through multiple tiny openings in order to obtain an homogeneous dispersion and a coating of the solid particles (active drug) with the dispersion aids (surfactants).

Then, a complementary fraction of propellant is added in small amounts maintaining active the forced recirculation scheme. The suspension is then forced into the dispensing units through the dosifying valve which has been previously crimped to each unit prior to the filling.

The present invention also comprises a device for the preparation of compositions dispensable as sprays, as later described in claim 1, characterized by comprising
a pressurized vessel comprising input means for the admission of liquid propellant,
input means for admission of the composition components; and
agitation and homogenization means for the products admitted in said container (liquid propellant and the indicated components).

### BRIEF DESCRIPTION OF THE DRAWINGS

Figure N° 1 is a schematic view of the device used for manufacturing the compositions dispensable as aerosols accordingly to the present invention; and
Figure N° 2 is a partial view of the device of Figure N° 1 showing in detail the pressure container associated with the homogenizing unit.

The numeral references correspond to the following elements:
1. Motor for reduction of the speed of the homogenizer
2. Circulation regulatory screw
3. Piston mechanism of the homogenizer
4. Unidirectional valves
5. Pressurized vessel where the composition to be packed is prepared
6. Agitator
7. Manometer and safety valve
8. Manually operated port
9. Scale
10/12. Pneumatic acting pumps
11. Propellant filling deposit
13. Table supporting the containers to be filled
14. Regulator adaptable to the containers' height
15. Pneumatic cylinder for driving the filling of the containers
16. Valve
17. Needle valve (recirculation)
18. First receptor of the filling unit
19. Piston for filling the containers
20. Container to be filled with the valve already crimped
21. Homogenizer
22/23. Circulation tubes of the contents of the reactor to and from the homogenizer
24/25'. Valves of the circulation lines
25. Charge line with propellant from the reactor
26. Liquified propellant line from the deposit
27. Composition conducting line to the container filling station

### DETAILED DESCRIPTION OF THE INVENTION

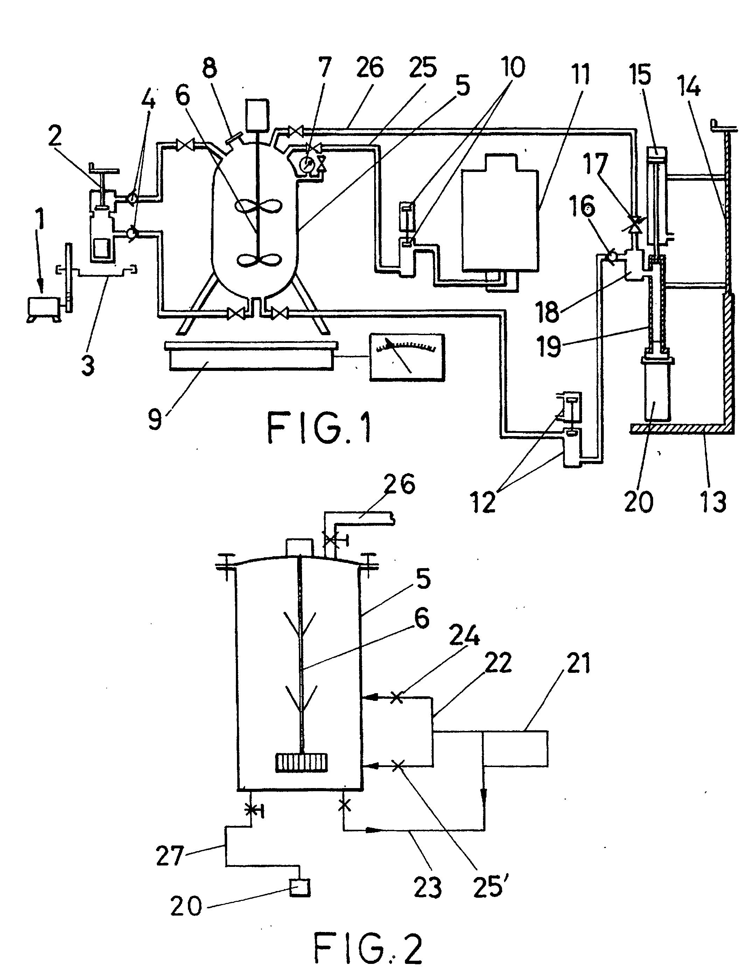

In the device illustrated on Figure N° 1, the propellant is feed to the pressurized vessel or reactor (5) from the deposit of liquified propellant (11), through pipe (25) associated to a pneumatic pumping equipment (10).

The present invention is not dependent nor is associated with any specific propellant; every available propellant compatible with the active ingredient is useful and adequate with the objectives and purposes of the invention. The dosage of the propellant towards the reactor vessel is controlled by a weighing mechanism (9), which supports deposit (11). Naturally, other means to control dosage can be used.

The reactor pressurized vessel (5) is also supported on a weighing structure (9) for registering the amounts of the remaining ingredients of the composition (dispersing agents, emulsifiers and any other additives to be included in the composition) introduced through the admission part (8).

Said pressurized vessel or reactor (5) comprises means for agitation, removal, and mixing of the products introduced, including the active ingredients introduced through the manually operated port (8), or through an auxiliary feeding line (not shown) . Said pressurized vessel (5) is associated to a forced recirculation circuit of the charge admitted in said vessel (5), schematically illustrated in Figure N° 2. In said circuit the mixture processed in the reactor vessel (5) is continuously drawn (line 23) from the lower part of the reactor (5) and recirculated under pressure via (22) previously passing through the homogenizer (21) until a uniform dispersion is obtained and every solid particle being coated with the dispersion aids (surfactants).

The preferred homogenizers are those of the Manton Gaulin type being a device comprising pistons which force the material of line (23), at high pressure through plates provided with a plurality of small openings. The forced pass of the material (propellant, additives and the active agents) through the holes generates important attrition forces which determine the disintegration of the residual solid particles and the covering of each solid particle with the dispersion agents (surfactants).

Once the preparation of the composition is completed and the corresponding controls have been made the containers (20) are filled up through the already crimped valve installed in a previous operation (not shown). The completed composition is conducted through line (26) to the conventional installation or plant to fill each container.

The process and the device of the present invention allows the preparation of aerosol compositions for the pharmaceutical industry both, for internal use (aerosols for the respiratory tract or for mouth or nasal use) or for external use in administering antibiotics, anti-inflammatories, anti-histaminics, etc.

In relation with conventional techniques, the process and device of the present invention can be distinguished because:
- it does not requires cold installation or equipment;
- the possibility of water condensation in the containers is nil because the filling is accomplished in a closed circuit;
- for the same reason, the losses of propellant are avoided;
- the dosage of the compounds is more accurate because the operation is carried on a single operation, at room temperature and pressure and under an inert atmosphere (oxygen free).

The forced recirculation allows the complete coating of each of the solid particles with the dispersion aids (surfactants) thus avoiding the complex operations of the coating of the particles prior to the fabrication of the same.

In this manner, losses are avoided or substantially reduced, as well as the pre handling of the solids.

The fact that the coating is made in a sole operation, in a closed circuit and under an inert atmosphere, provides differences and operative advantages, as well as economic, as compared with conventional techniques.

Whenever necessary, depending on the propellant and the characteristics of the active ingredients, it may prove necessary to previously introduce an inert gas (such as N₂) in the reactor in order to obtain an initial internal pressure, avoid the evaporation of the propellant and provide a chemically inert medium for the active drugs.

The following example, incorporated herein merely for illustrative purposes, shows one possible embodiments of the invention:

### EXAMPLE 1

The reactor vessel (5) was loaded with 2,5 Kg of propellant 134-a (tetrafluoroethane) and under continuous agitation 0,4 Kg of polioxiethylen 25-gliceriltrioleate Tagat R (commercially available from Goldschmidt AG) and 0,3 Kg of Nathin 3KE (a product of Natermann Phospholipid GMBH-Köln, Germany) mixed with 0,5 Kg of absolute alcohol were added.

Maintaining agitation at room temperature, 1,760 Kg of micronized sodium chromeglycate were added. The suspension formed was recycled through the high pressure homogenizer for 30 minutes. The rest of the propellant (32,3 Kg) was added, in small fractions in a period of 2 hours maintaining constant agitation and homogenization, until an easily resuspendable uniform suspension was obtained.

The suspension was fractioned by filling the 1/2 ounce containers, with the valve already crimped, through the 100 ml/doses valve.

## Claims

1. A process for manufacturing compositions dispensable as sprays-aerosols-, **characterized in that** it comprises the steps of:
- maintaining in a pressurized reactor vessel a mixture of at least one active ingredient, and additives of the composition, and an initial fraction of a liquified propellant; said additives including dispersion stabilizing surfactant agents of said at least one active ingredient and of the additives in the liquid phase of the propellant, under a nitrogen atmosphere which is free of oxygen;
- maintaining said mixture under constant recirculation under high pressure conditions, forcing said mixture through plates with a plurality of micro-apertures until obtaining a uniform dispersion of particles of the at least one active ingredient, said particles being coated with a film of said dispersion stabilizing surfactant agents;
- completing the volume by adding a complementary fraction of propellant to the dispersion obtained in the previous step in order to obtain the final composition; and
- fractioning the resulting composition into dispensing containers by filling the containers through the dosage valve of each container; said dosage valve being already crimped on each container before filling.

2. A process according to claim 1, **characterized in that** said initial fraction of propellant introduced in said pressurized reactor vessel is a fraction, by weight or volume, of the total liquified propellant of the final composition, sufficient for dissolving-dispersing the dosified compounds in said reactor vessel.

3. A process according to claim 2, **characterized in that** the ratio of said initial fraction of the propellant to said complementary fraction of propellant is about 1:3.

4. A process according to claim 1 or 2, **characterized in that** said step of maintaining said mixture under constant recirculation includes coating the particles of the at least one active ingredient suspended in a liquid phase of the propellant with a film of the surfactant agents which stabilize the dispersion.

5. A process according to any of the preceding claims, **characterized in that** said active ingredient is a pharmaceutical composition.

6. A device for the preparation of compositions dispensable as sprays in accordance with claim 1, **characterized in that** it comprises a pressurized reactor vessel having means for admitting the liquified propellant, means for admitting composition compounds and means for agitating and homogenizing the mixture in the reactor vessel, said homogenizing means including one or more micro-apertured plates and means for forcing said mixture through said micro-apertured plate(s), said mixture comprising the liquified propellant, the active ingredient(s), and the composition additives and wherein the reactor vessel is connected to a dispersing unit with dosifying valves.

7. A device according to claim 6, **characterized in that** said homogenizing means comprise a closed circuit provided with forced recirculation between the pressurized reactor vessel and a separate homogenizer device interconnected by a two-way piping for the composition prepared in said pressurized reactor vessel, said circuit including pumping means and said micro-apertured plates for cooperating with the homogenization and stabilization of the dispersion.

## Patentansprüche

1. Verfahren zur Herstellung von Zubereitungen, welche für die Anwendung als sprühbare Zubereitungen oder als Aerosol geeignet sind, dadurch gekenzeichnet, dass
a) eine Mischung, bestehend aus mindestens einem aktiven Bestanteil, Zubereitungshilfstoffe und einer Anfangsteilmenge oder Fraktion eines verflüssigten Treibgases, in einem Reaktorbehältern unter einem inneren Überdruck in Anwesenheit einer sauerstofffreien Stickstoffsatmosphäre gehalten wird, wobei die Zubereitungshilfsstoffe Tenside enthalten, welche fähig sind die Dispersion zu stabiliesieren, die mindestens einen aktiven Bestanteil und die in der flüssigen Phase des Treibgases bestehenden Zubereitungshilfstoffe enthalten,
b) diese Mischung einem kontinuirlichen Umlauf unter Hochdruckbedingungen unterworfen wird, anschliessend wird diese durch Platten gepresst, welche mit zahlreichen Mikroöffnungen versehen sind, bis eine homogene Dispersion der mindestens einem Bestandteil entsprechenden Teilchen erzielt wird, wobei die Teilchen mit einer Filmschicht der Dispersion stabilisierenden Tenside überzogen werden,
c) das Volumen durch den Zusatz von einer Ergänzungsteilmenge eines Treibgases in der vorstehenden Schritt erhaltenden Dispersion ergänzt wird, um somit die Endzubereitung herzustellen, und
d) die erhaltene Zubereitung in Dosierbehälter aufgeteilt wird, wobei die Füllung dieser Behälter durch das jeweilige Dosierventil erfolgt, wobei dieses Dosierventil in jeden Behälter bereits vor der Füllung eingesetzt wurde.

2. Verfahren gemäss Anspruch 1, **dadurch gekennzeichnet, dass** die dem unter innerem Überdruck stehenden Reaktorbehältern zugeführte Anfangsteilmenge oder Fraktion des verflüssigten Treibgases eine ausreichende Teilmenge bezogen auf das gesamte Gewicht oder Volumen des verflüssigten Treibgases der erhaltenen Zubereitung darstellt, um die Dispersion/Auflösung der dosierten Verbindungen in diesem Reaktorbehältern zu erlangen.

3. Verfahren gemäss Anspruch 2, **dadurch gekennzeichnet, dass** das Verhältnis von der Anfangsteilmenge oder Fraktion des Treibgases bezüglich der zu ergänzenden Teilmenge des Treibgases annähernd 1:3 beträgt.

4. Verfahren gemäss den Ansprüchen 1 oder 2, **dadurch gekennzeichnet, dass** der Schritt, in dem diese Mischung einem kontinuirlichen Umlauf unter Hochdruckbedingungen unterworfen ist, den Überzug der Teilchen des mindestens einen aktiven Bestandteiles mit einer Filmschicht der Dispersion stabilisierenden Tenside beinhaltet, wobei dieses Bestandteil in der flüssigen Phase des Treibgases suspendiert ist.

5. Verfahren gemäss einem der vorgennanten Ansprüche, **dadurch gekennzeichnet, dass** das aktive Bestandteil eine pharmazeutische Zubereitung ist.

6. Vorrichtung zur Herstellung von Zubereitungen, welche zur Anwendung als Aerosol geeignet sind, gemäss Anspruch 1, dadurch gekenzeichnet, dass sie einen Reaktor-Druckbehälter beinhaltet, der verschiedene Einheiten oder Elementen enthält, welche es ermöglichen:
- das verflüssigte Treibgas und die Zubereitungsverbindungen aufzunehmen;
- die Mischung in dem Reaktorbehälter aufzurühren und zu homogenisieren, wobei die Homogenisierungseinheiten von einer oder mehreren Platten gebildet werden, die mit zahlreichen Mikroöffnungen versehen sind;
- diese Mischung durch die mit Mikroöffnungen versehene Platte zu pressen,
wobei diese Mischung das verflüssigte Treibgas, das aktive Bestandteil und die Zubereitungshilfstoffe enthält und der Reaktorbehälter an eine mit Dosierventil versehene Dosieranlage angeschlossen ist.

7. Vorrichtung gemäss Anspruch 6, **dadurch gekennzeichnet, dass** die Homogenisierungseinheiten einen geschlossenen Strömungskreis enthalten, der mit einem Druckumlauf zwischen dem Druckreaktor und einer getrennten Homogenisierungsanlage versehen ist, wobei diese Homogenisierungsanlage durch eine Zweiwegrohrleitung für die in dem Reaktorbehältern unter innerem Überdruck hergestellte Zubereitung verbunden ist, wobei der Strömungskreis von der Pumpeinheit und der mit Mikroöffnungen versehenen Platten gebildet wird, um die Homogenisierung und die Stabilisierung der Dispersion zu fördern.

## Revendications

1. Un processus servant à fabriquer des compositions jetables telles qu'aérosols, **caractérisé en ce qu'**il comprend les étapes suivantes:
- conservation dans une cuve de réaction pressurisée d'un mélange comprenant au moins un ingrédient actif, et des additifs de la composition, et une fraction initiale d'un propulseur liquéfié; lesdits additifs comprenant des agents surfactants stabilisateurs de dispersion dudit au moins un ingrédient actif et des additifs du propulseur à l'état liquide, sous une atmosphère de nitrogène étant libre d'oxygène;
- maintien dudit mélange sous recirculation continuelle sous des conditions d'haute pression, en faisant passer ledit mélange à travers des plaques qui présentent diverses micro-ouvertures jusqu'à l'obtention d'une dispersion uniforme des particules du au moins un ingrédient actif, lesdites particules étant recouvertes d'une pellicule desdits agents surfactants stabilisateurs de dispersion;
- complétion du volume en ajouttant una fraction complémentaire du propulseur à la dispersion obtenue à l'étape préalable en vue d'obtenir la composition finale; et
- fractionnement de la composition résultante dans des conteneurs de débit en remplissant les conteneurs à l'aide de la valve de dosage de chaque conteneur; ladite valve de dosage étant déjà torsadé dans chaque conteneur avant le remplissage.

2. Un processus suivant la revendication 1, **caractérisé en ce que** ladite fraction initiale de propulseur introduite dans ladite cuve de réaction pressurisée est une fraction, par rapport au poids ou au volume de propulseur liquéfié total de la composition finale, suffisante pour dissoudre/disperser les composants dosifiés contenus dans ladite cuve de réaction.

3. Un processus suivant la revendication 2, **caractérisé en ce que** la raison de ladite fraction initiale de propulseur par rapport à ladite fraction complémentaire de propulseur est d'environ 1:3.

4. Un processus suivant la revendication 1 ou 2, **caractérisé en ce que** ladite étape de maintien dudit mélange sous recirculation continuelle comprend le recouvrement des particules du au moins un ingrédient actif étant suspendu dans un état liquide du propulseur avec une pellicule des agents surfactants qui stabilisent la dispersion;

5. Un processus suivant l'une quelconque des revendications précédentes, **caractérisé en ce que** ledit ingrédient actif est une composition pharmaceutique.

6. Un dispositif pour la préparation de compositions jetables tels qu'aérosols suivant la revendication 1, **caractérisé en ce qu'**il comprend une cuve de réaction pressurisée ayant des moyens pour admettre le propulseur liquéfié, des moyens pour admettre les composants de la composition et des moyens pour agiter et homogénéiser le mélange dans la cuve de réaction, lesdits moyens d'homogénéisation comprenant une o plusieurs plaques micro-ouvertes et des moyens pour faire passer ledit mélange à travers ladite/lesdites plaque(s) micro-ouverte(s), ledit mélange comprenant le propulseur liquéfié, le(les) ingrédient(s) actif(s) et les additifs de la composition, et dans lequel la cuve de réaction est connectée à une unité de dispersion ayant des valves de dosage.

7. Un dispositif suivant la revendication 6, **caractérisé en ce que** lesdits moyens d'homogénéisation comprennent un circuit fermé pourvu d'une recirculation forcée entre la cuve de réaction pressurisée et un dispositif d'homogénéisation séparé, interconnectés par une tuyauterie à deux sens pour la composition préparée dans ladite cuve de réaction pressurisée, ledit circuit comprenant des moyens de pompage et lesdites plaques micro-ouvertes servant à collaborer avec l'homogénéisation et la stabilisation de la dispersion.
